# EUROPEAN PATENT SPECIFICATION

(11) **EP 4 029 954 B1**
(45) Date of publication and mention of the grant of the patent: **30.08.2023**
(21) Application number: 20862630.9
(22) Date of filing: 22.06.2020
(51) Int. Cl.: C21B 11/10, C21C 5/52, C21C 5/56, F27B 3/18, F27D 13/00

(54) **METHOD FOR PRODUCING MOLTEN IRON USING AN ELECTRIC FURNACE**
VERFAHREN ZUR HERSTELLUNG VON EISENSCHMELZE MIT EINEM ELEKTROOFEN
PROCÉDÉ DE PRODUCTION DE FER FONDU AVEC UN FOUR ÉLECTRIQUE

(30) Priority: 10.09.2019 JP 2019164846
(43) Date of publication of application: 20.07.2022
(73) Proprietor: JFE Steel Corporation, Tokyo 100-0011 (JP)
(72) Inventor: MIWA, Yoshihiro, Tokyo 100-0011 (JP); TSUTSUMI, Koichi, Tokyo 100-0011 (JP); SUMI, Ikuhiro, Tokyo 100-0011 (JP)
(74) Representative: Hoffmann Eitle
(86) International application number: PCT/JP2020/024337
(87) International publication number: WO 2021/049125

(56) References cited:
- WO-A1-2013/099807
- JP-A- H0 914 865
- JP-A- H0 914 865
- JP-A- H06 228 623
- JP-A- 2002 173 716
- JP-A- 2003 200 131
- JP-A- 2012 180 560
- JP-A- 2016 509 624
- US-A- 4 605 437

## Description

### Technical Field

The present invention relates to a method for producing molten iron by melting iron scrap in an electric furnace.

### Background Art

An electric furnace produces molten iron by using arc heat to melt iron scrap (a cold iron source) and thus consumes a large amount of electric power to generate the arc heat. Conventional methods adopted to suppress electric power consumption in an electric furnace include, for example, a method of preheating iron scrap using a high-temperature exhaust gas generated during melting or a method of blowing a carbonaceous material such as coke thereinto as an auxiliary heat source.

As the method for melting iron scrap while preheating the iron scrap using a high-temperature exhaust gas generated during melting, there is known a method described below. That is, in the method, an iron scrap preheating chamber is provided on and continuously with a melting chamber, a high-temperature exhaust gas generated in the melting chamber is passed through the preheating chamber filled with iron scrap so as to preheat the iron scrap, and the iron scrap thus preheated is supplied to the melting chamber.

Regarding such a method for melting iron scrap, Patent Literature 1 discloses a method for adjusting a type and a blending amount of iron scrap so that a preheating chamber is filled with the iron scrap to such an extent as to have an apparent bulk density value of not less than 0.7 t/m³. This method for melting iron scrap is asserted to provide high energy utilization efficiency and effectively reduce production costs. Furthermore, the method of Patent Literature 1 also involves blowing a carbonaceous material into a melting chamber, thus utilizing the carbonaceous material as an auxiliary heat source.

### Citation List

### Patent Literature

Patent Literature 1: Japanese Patent Laid-Open No. 2012-180560
Further related art can be found in JP 2002173716A which describes a method for recycling treatment for used automobile or used household electrical appliance, in JP H09014865A which describes a scrap preheater for an electric furnace and a preheating method therefor and in US 4605437A1 which describes reactor iron making.

### Summary of Invention

### Technical Problem

In recent years, it has been strongly demanded to operate an electric furnace so as to achieve improved energy efficiency and electric power saving from the viewpoint of global environmental issues, and in response to such a demand, the method of Patent Literature 1 can be somewhat effective in the viewpoint of improving energy efficiency. As a result of studying, however, the inventors of the present application have found that, in terms of energy utilization efficiency, it is not sufficient just to regulate a filling density (apparent bulk density) of iron scrap in a preheating chamber as in Patent Literature 1, and higher efficiency needs to be pursued. That is, it has been found that significant factors in achieving high energy utilization efficiency include not only the filling density (apparent bulk density) of the iron scrap in the preheating chamber but also a filling height of the iron scrap in the preheating chamber, conditions for supplying a carbonaceous material (auxiliary heat source) and oxygen into a melting chamber, and so on. It is, therefore, necessary to optimize operating conditions including these factors.

Accordingly, it is an object of the present invention to solve the foregoing problem with the prior art and to provide a method for producing molten iron using an electric furnace provided with a preheating chamber for preheating iron scrap by using a furnace exhaust gas, which makes it possible to produce molten iron with high energy utilization efficiency and also to reduce a production cost of molten iron.

### Solution to Problem

As a result of conducting diligent and various studies to solve the above-described problem, the inventors have found that high energy utilization efficiency can be achieved by optimizing, in addition to a filling density (apparent bulk density) of iron scrap in a preheating chamber, an iron scrap filling ratio (filling height) in the preheating chamber, a supply ratio between a carbonaceous material (auxiliary heat source) and oxygen into a melting chamber, and so on.

The present invention has been made based on this finding and is summarized as follows.
[1] A method for producing molten iron using an electric furnace including a melting chamber (1) for melting iron scrap by arc heating and a shaft-type preheating chamber (2) provided on and continuously with the melting chamber (1) and used to preheat the iron scrap, in which the iron scrap is sequentially charged into the preheating chamber (2) so that the preheating chamber (2) is filled with the iron scrap, an exhaust gas generated in the melting chamber (1) is passed through the preheating chamber (2) filled with the iron scrap so as to preheat the iron scrap, the iron scrap thus preheated is sequentially caused to descend in the preheating chamber (2) so as to be supplied into the melting chamber (1), and the iron scrap is melted in the melting chamber (1) to obtain molten iron,
   characterized in that
   the iron scrap is charged into the preheating chamber (2) so that an apparent bulk density (P) of the iron scrap filled in the preheating chamber (2) is not less than 0.50 t/m³ and less than 1.00 t/m³ and an iron scrap filling ratio H_{SC}/H_{SF} in the preheating chamber (2) (where Hsc denotes a filling height [m] of the iron scrap in the preheating chamber, and H_{SF} denotes a preheating chamber interior height [m]) is 0.5 to 0.8,
   a carbonaceous material is used as an auxiliary heat source for melting the iron scrap in the melting chamber (1), and
   oxygen and the carbonaceous material are blown into the melting chamber (1) so that a carbon-oxygen ratio C/O (where C denotes a carbon amount [kg] in the carbonaceous material, and O denotes an oxygen blowing amount [Nm³]) is not less than 0.70.
[2] The method for producing molten iron using an electric furnace, in which in the production method described above in [1], an oxygen concentration in the preheating chamber (2) is less than 15 vol%.
[3] The method for producing molten iron using an electric furnace, in which in the production method described above in [1] or [2], a blowing amount of the carbonaceous material into the melting chamber (1) is 0.3 to 1.4 (kg/min) per ton of molten iron to be tapped, and the oxygen blowing amount is 20 to 40 (Nm³/hr) per ton of molten iron to be tapped.
[4] The method for producing molten iron using an electric furnace, in which in any of the production methods described above in [1] to [3], one or more auxiliary burners are installed in the melting chamber (1) and used to heat the iron scrap and molten iron in the melting chamber.
[5] The method for producing molten iron using an electric furnace, in which in any of the production methods described above in [1] to [4], the electric furnace comprises the preheating chamber (2) continuously provided on the melting chamber (1) at a position distant from an arc heating portion, and a scrap charge port (20) provided at a top of the preheating chamber (2), and
   the iron scrap charged into the preheating chamber (2) through the scrap charge port (20) is filled in the preheating chamber (2) and in a space (1a) of the melting chamber (1) below the preheating chamber (2), and the iron scrap that is in the space (1a) is sequentially extruded toward the arc heating portion.
[6] The method for producing molten iron using an electric furnace, in which in the production method described above in [5], the iron scrap in the space (1a) is sequentially extruded toward the arc heating portion by an extruder (3).

### Advantageous Effects of Invention

According to the present invention, in a method for producing molten iron using an electric furnace including a preheating chamber for preheating iron scrap by using a furnace exhaust gas, it is possible to produce molten iron with high energy utilization efficiency and also to reduce production costs of molten iron.

### Brief Description of Drawing

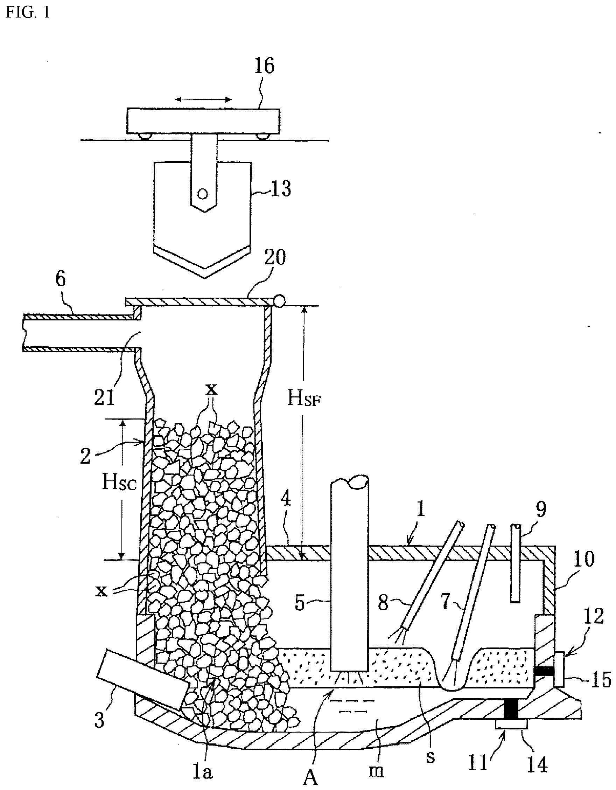

FIG. 1 is an explanatory view schematically showing a longitudinal cross-section of an electric furnace according to an embodiment of the present invention.

### Description of Embodiment

In a method for producing molten iron on which the present invention is based, in an electric furnace including a melting chamber 1 for melting iron scrap by arc heating and a shaft-type preheating chamber 2 continuously provided on the melting chamber 1 to be used to preheat the iron scrap, the iron scrap is sequentially charged into the preheating chamber 2 so that the iron scrap is filled in the preheating chamber 2, an exhaust gas generated in the melting chamber 1 is passed through the preheating chamber 2 filled with the iron scrap so as to preheat the iron scrap, the iron scrap thus preheated is sequentially caused to descend in the preheating chamber 2 so as to be supplied into the melting chamber 1, and the iron scrap is melted in the melting chamber 1 to obtain molten iron. Furthermore, in the method for producing molten iron, a carbonaceous material (auxiliary heat source) and oxygen are blown into the melting chamber 1. In the present invention, in such a molten iron production process, an apparent bulk density (P) of the iron scrap filled in the preheating chamber 2, an iron scrap filling ratio H_{SC}/H_{SF} (where Hsc denotes a filling height [m] of the iron scrap in the preheating chamber, and H_{SF} denotes a preheating chamber interior height [m]), and a carbon-oxygen ratio C/O regarding the carbonaceous material and the oxygen to be blown into the melting chamber 1 (where C denotes a carbon amount [kg] in the carbonaceous material, and O denotes an oxygen blowing amount [Nm³]) are optimized.

In the present invention, the iron scrap is charged into the preheating chamber 2 so that the apparent bulk density (P) of the iron scrap filled in the preheating chamber 2 is not less than 0.50 t/m³ and less than 1.00 t/m³ and the iron scrap filling ratio H_{SC}/H_{SF} in the preheating chamber 2 (where H_{SC} denotes a filling height of the iron scrap in the preheating chamber, and H_{SF} denotes a preheating chamber interior height) is 0.5 to 0.8.

There are various shapes and sizes of iron scrap (for example, types of iron scrap specified in the "Uniform Standards of Ferrous Scraps" of the Japan Ferrous Raw Materials Association), which are appropriately combined to be blended and charged into the preheating chamber 2 so that the apparent bulk density (P) of an iron scrap filling layer in the preheating chamber 2 is not less than 0.50 t/m³ and less than 1.00 t/m³.

The apparent bulk density (P) of iron scrap is expressed by (P) = Σ(mass i)/Σ(volumetric capacity i) = Σ (mass i)/Σ(mass i/bulk density i). Here, a unit of mass is [t], a unit of volumetric capacity is [m³], a unit of bulk density is [t/m³], and i indicates a type of scrap to be charged. For example, in the case of charging two or more types of scrap from among Heavy, Press, Shredder scrap, Punched scrap, Turning, and Cast iron specified in the "Uniform Standards of Ferrous Scraps" of the Japan Ferrous Raw Materials Association, a bulk density of each scrap is determined beforehand, and from the bulk density and a blending ratio [mass%] of the each of the types of scrap in the iron scrap charged, the apparent bulk density (P) of the iron scrap can be determined. That is, the apparent bulk density (P) can be calculated by the apparent bulk density (P) = (Heavy bulk density) × (Heavy blending ratio) + (Press bulk density) × (Press blending ratio) + (Shredder scrap bulk density) × (Shredder scrap blending ratio) + (Punched scrap bulk density) × (Punched scrap blending ratio) + (Turning bulk density) × (Turning blending ratio) + (Cast iron bulk density) × (Cast iron bending ratio). The bulk density of each of these types of scrap can be determined by, for example, placing a target scrap in a large container having a certain capacity to measure a mass thereof and determining the bulk density from a volumetric capacity thereof and the mass.

Iron scrap to be melted in the present invention may include, in addition to the scraps specified in the above-described "Uniform Standards of Ferrous Scraps" of the Japan Ferrous Raw Materials Association, for example, direct reduced iron, cold iron, and so on containing iron as a main component. It may also include an unsteady part of a cast slab cast by continuous casting or ingot casting, a crop resulting from rolling of a steel material such as a steel strip, and in-house scrap generated from an iron mill, such as pig iron obtained by solidifying molten pig iron. These scraps other than those specified in "Uniform Standards of Ferrous Scraps" are classified as other types of scrap as required, and a bulk density of each scrap is determined. Scrap of a type having a high content of iron oxide, though it requires extra energy for reducing the iron oxide, may be appropriately used in consideration of operation costs and so on.

Furthermore, a type of scrap does not necessarily have to be classified based on the "Uniform Standards of Ferrous Scraps" and may be classified based on any standard according to a bulk density. The point is that a bulk density is determined for each of the decided types of scrap, and based on the bulk density and a blending ratio of each of the types of scrap, the apparent bulk density (P) of iron scrap filled in the preheating chamber 2 could be determined.

Here, in either case of the apparent bulk density (P) being less than 0.50 t/m³ or not less than 1.00 t/m³, heat transfer efficiency between exhaust gas and iron scrap might be deteriorated to thus cause a high-temperature exhaust gas, which does not sufficiently exchange heat with the iron scrap, to be discharged from the preheating chamber 2, so that preheating efficiency is decreased. That is, when the apparent bulk density (P) is less than 0.50 t/m³, the efficiency of heat transfer from the exhaust gas to the iron scrap filled in the preheating chamber 2 is low, and the exhaust gas blows through while remaining at a high temperature to pass through the preheating chamber 2, so that the preheating efficiency is decreased. On the other hand, when the apparent bulk density (P) is not less than 1.00 t/m³, the preheating efficiency is decreased due to pressure loss. As described above, in either case of the apparent bulk density (P) being too small or too large, the preheating efficiency is decreased. In this case, it is required to decrease a descending speed of the iron scrap in the preheating chamber 2 to thus maintain a preheating temperature, in which case, however, the iron scrap is excessively oxidized in the preheating chamber 2. Further, there might occur a loss of energy used for reducing the iron scrap thus oxidized. Furthermore, when the iron scrap in the preheating chamber 2 is excessively oxidized, there might be caused a trouble (hanging) that, by oxidative heat generation, a part of the iron scrap is melted to fuse with surrounding iron scrap, so that the iron scrap in the preheating chamber 2 is stopped from descending. At the occurrence of such hanging, the iron scrap will not descend until the hanging is eliminated, and thus the iron scrap in the preheating chamber 2 continues to be preheated, so that oxidation thereof is further promoted to cause further hanging. Furthermore, since electric power continues to be applied while the hanging is in progress, wasteful energy is consumed. Furthermore, from the foregoing viewpoint, a particularly preferable value of the apparent bulk density (P) is in the range of 0.60 to 0.80 t/m³.

Furthermore, iron scrap is charged into the preheating chamber 2 so that the iron scrap filling ratio H_{SC}/H_{SF} in the preheating chamber 2 is always maintained in a range of 0.5 to 0.8 and preferably in the range of 0.6 to 0.8. When the iron scrap filling ratio H_{SC}/H_{SF} in the preheating chamber 2 is less than 0.5, the heat transfer efficiency from an exhaust gas to the iron scrap filled in the preheating chamber 2 is low, and the exhaust gas blows through while remaining at a high temperature to pass through the preheating chamber 2, thus decreasing preheating efficiency. Accordingly, also in this case, it is required to decrease a descending speed of the iron scrap in the preheating chamber 2 to maintain a preheating temperature. As a result, as described above, the iron scrap is excessively oxidized in the preheating chamber 2, thus causing a loss of energy used for reducing the iron scrap thus oxidized. Furthermore, when the iron scrap in the preheating chamber 2 is excessively oxidized, there may be caused the hanging as described above. When, on the other hand, the iron scrap filling ratio H_{SC}/H_{SF} is more than 0.8, there might be caused, for example, a trouble that a preheating chamber gate (a scrap charge port 20 in an after-mentioned embodiment) fails to be properly closed after the iron scrap is charged. When the preheating chamber gate is not properly closed, an exhaust gas or dust that is supposed to be exhausted from the preheating chamber 2 through a duct dissipates through the preheating chamber gate.

During the operation, iron scrap preheated in the preheating chamber 2 sequentially descends to be supplied to the melting chamber 1. A filling height of the iron scrap in the preheating chamber 2 is decreased accordingly, and thus a new supply of iron scrap is charged to the preheating chamber 2 at a predetermined timing. Further, the new supply of iron scrap is charged so that the iron scrap filling ratio H_{SC}/H_{SF} in the preheating chamber 2 is always maintained in a range of 0.5 to 0.8. To this end, it is preferable to use a monitoring camera or the like for monitoring an upper surface level of an iron scrap filling layer in the preheating chamber 2 as will be described later.

Moreover, in the present invention, a carbonaceous material is used as an auxiliary heat source for melting iron scrap in the melting chamber 1, and oxygen (pure oxygen) and the carbonaceous material are blown into the melting chamber 1 so that the carbon-oxygen ratio C/O (where C denotes a carbon amount [kg] in the carbonaceous material, and O denotes an oxygen blowing amount [Nm³]) is not less than 0.70. In the case of using an oxygen-containing gas (for example, a mixed gas of pure oxygen and air) instead of pure oxygen, the oxygen blowing amount O refers to a blowing amount of oxygen in the oxygen-containing gas.

While a blowing lance is typically each used to blow a carbonaceous material and oxygen, blowing may be performed by a method of injection from above the melting chamber 1 as will be described later or a method of bottom-blowing injection through a bottom-blowing nozzle.

Here, when the carbon-oxygen ratio C/O is too small, an oxygen concentration in an exhaust gas becomes high due to unreacted oxygen. Because of this, an oxygen concentration in the preheating chamber 2 through which the exhaust gas flows increases to form an oxidation atmosphere in the preheating chamber 2, and thus iron scrap is excessively oxidized, so that there occurs loss of energy used for reducing the iron scrap thus oxidized. Furthermore, as described above, when the iron scrap in the preheating chamber 2 is excessively oxidized, there is a fear of occurrence of the trouble (hanging) that, by oxidative heat generation, part of the iron scrap is melted to fuse with surrounding iron scrap, so that the iron scrap in the preheating chamber 2 is stopped from descending. The foregoing problem becomes more likely to occur when the carbon-oxygen ratio C/O is less than 0.70. Furthermore, from the above-described viewpoint, it is particularly preferable that the carbon-oxygen ratio C/O is in a range of 0.75 to 0.80. Although there is no limitation on an upper limit of the carbon-oxygen ratio C/O, it is preferable to perform the operation with the carbon-oxygen ratio C/O set to less than 2.0.

As described above, when the oxygen concentration in the preheating chamber 2 is high, iron scrap is excessively oxidized, so that there occurs loss of energy used for reducing the iron scrap thus oxidized. For this reason, it is preferable that the oxygen concentration in the preheating chamber 2 is less than 15 vol%.

Furthermore, in blowing the carbonaceous material and oxygen into the melting chamber 1 as described above, when a blowing amount of the carbonaceous material is too small, the carbonaceous material fails to sufficiently function as an auxiliary heat source, whereas when the blowing amount of the carbonaceous material is too large, an interior of the furnace is cooled by the carbonaceous material blown thereinto, so that an excessive reduction reaction occurs to decrease operational efficiency. Furthermore, when a blowing amount of the oxygen is too small, the efficiency in melting scrap by using oxidation reaction heat is decreased to lower the operational efficiency. When, on the other hand, the blowing amount of the oxygen is too large, there is a fear of causing excessive splashes of molten slag and molten iron, leading to facility trouble such as damage to a furnace body or damage to a cooling facility. For this reason, it is preferable that the blowing amount of the carbonaceous material is about 0.3 to 1.4 (kg/min) per ton of molten iron to be tapped, and the blowing amount of the oxygen is about 20 to 40 (Nm³/hr) per ton of molten iron to be tapped.

FIG. 1 is an explanatory view schematically showing, in longitudinal cross section, an electric furnace of an embodiment of the present invention.

The electric furnace includes a melting chamber 1 for melting iron scrap by arc heating and a preheating chamber 2 for preheating the iron scrap to be supplied to the melting chamber 1.

A top of the melting chamber 1 is covered with an openable/closable furnace lid 4 having a water-cooled structure. At substantially a center of the melting chamber 1, a plurality of electrodes 5 are inserted from above through the furnace lid 4, and an arc heating portion A for melting iron scrap is formed by striking an arc between the electrodes 5. The electrodes 5 are typically made of graphite or the like and are movable up and down.

The shaft-type preheating chamber 2 is provided on and continuously with the melting chamber 1 at a position distant from the arc heating portion A, and the preheating chamber 2 communicates with the melting chamber 1 in a vertical relationship. The openable/closable scrap charge port 20 is provided at a top of the preheating chamber 2. Furthermore, an exhaust port 21 is provided at an upper side part of the preheating chamber 2, and an exhaust duct 6 is connected to the exhaust port 21. The exhaust duct 6 is connected to a suction blower (not shown), and through suction by the suction blower, a high-temperature exhaust gas generated in the melting chamber 1 flows to the preheating chamber 2, passes through the preheating chamber 2, and then is exhausted through the exhaust duct 6. A dust collector (not shown) is provided at some point inside the exhaust duct 6.

A bottom-opening-type supply bucket 13 suspended from a traveling dolly 16 is configured to be movable above the preheating chamber 2, and iron scrap x is charged from the supply bucket 13 into the preheating chamber 2 through the scrap charge port 20.

In the melting chamber 1, there is provided an extruder 3 (pusher) that faces a space 1a below the preheating chamber 2 and is used to extrude the iron scrap x filled in the space 1a toward the arc heating portion A constituted by the electrodes 5. The extruder 3 is provided so as to be movable back and forth in a direction of the arc heating portion A (a direction of a furnace center in this embodiment) through a side wall of the melting chamber 1 and is driven by a driver (not shown) to extrude, with a distal end thereof, the iron scrap x in the space 1a toward the arc heating portion A.

For example, a configuration may be adopted in which the extruder 3 is not provided, and under a self-weight of the iron scrap x filled in the preheating chamber 2 and in the space 1a, the iron scrap x that is in the space 1a is spontaneously extruded toward the arc heating portion A.

An oxygen blowing lance 7 and a carbonaceous material blowing lance 8 are inserted into the melting chamber 1 from above through the furnace lid 4.

Using air or nitrogen as a conveyance gas, a carbonaceous material formed of one or more types selected from coke, char, coal, charcoal, and graphite is blown into a molten slag s through the carbonaceous material blowing lance 8. Furthermore, oxygen is supplied (blown) through the oxygen blowing lance 7, and the oxygen pushes away the molten slag, the oxygen thus being blown into molten iron m.

As described earlier, instead of pure oxygen, an oxygen-containing gas (for example, a mixed gas of pure oxygen and air) may be blown through the oxygen blowing lance 7.

In the melting chamber 1, a taphole 11 is provided on a bottom of the furnace at an opposite side to a side on which the preheating chamber 2 is provided, and a slag outlet 12 is provided on a side wall above the taphole 11. The taphole 11 and the slag outlet 12 are blocked with plugging sand and a mud agent to be filled inside and a taphole door 14 and a slag outlet door 15 that press them from outside.

At a position substantially directly above the taphole 11, an auxiliary burner 9 is provided so as to be is inserted from above into the melting chamber 1 through the furnace lid 4. The auxiliary burner 9 is configured to burn fossil fuels such as heavy oil, kerosene, pulverized coal, propane gas, or natural gas in the melting chamber 1 by using a combustion-supporting gas (oxygen, air, or oxygen-enriched air). For example, in tapping the molten iron m, unmelted iron scrap may remain, and in such a case, the auxiliary burner 9 can facilitate melting of the iron scrap.

An inner wall of the electric furnace 1 is configured with refractory material, and a furnace wall 10 of the melting chamber 1 has a water-cooled structure.

One or more auxiliary burners 9 are installed in the melting chamber 1 and used to heat the iron scrap x and the molten iron m in the melting chamber 1. It is common to install the auxiliary burner 9 in a general-use electric furnace not equipped with the preheating chamber 2. The heat transfer efficiency of combustion heat of the auxiliary burner 9 is about 20 to 50%, and most of the non-transferred combustion heat of the auxiliary burner 9 is dissipated as exhaust gas sensible heat. An electric furnace including the preheating chamber 2 as in the present invention, on the other hand, has an advantage that the iron scrap x can be melted while high-temperature exhaust gas sensible heat is being transferred thereto. Thus, the non-transferred part of the combustion heat of the auxiliary burner can also contribute to preheating of the iron scrap x. This can be achieved by properly maintaining the apparent bulk density (P) of the iron scrap x filled in the preheating chamber 2. At this time, the heat transfer efficiency of the auxiliary burner 9 can be improved up to 50 to 80% in total.

It is possible to perform the operation without the auxiliary burner 9. In the case of not using the auxiliary burner 9, however, while iron scrap around the electrodes 5 is melted quickly, iron scrap at a location distant from the electrodes 5, namely, iron scrap at a cold spot may remain unmelted. This may cause unevenness in scrap melting rate in the furnace to prolong an operation time, resulting in deterioration in electric power unit consumption. That is, by installing the auxiliary burner 9 at a position of the cold spot, it is possible to eliminate the cold spot by using the auxiliary burner 9. Accordingly, it is preferable that the auxiliary burner 9 is installed to be used. Furthermore, when the carbon-oxygen ratio C/O is controlled and the oxygen concentration in the preheating chamber 2 is less than 15 vol% as in the present invention, the higher an exhaust gas temperature in the preheating chamber 2, the more sufficiently the iron scrap can be preheated. As described above, the non-transferred part of combustion heat of the auxiliary burner 9 can also contribute to preheating of the iron scrap x. In the case of not using the auxiliary burner 9, however, depending on operation conditions, the iron scrap x in the preheating chamber 2 ends up being charged to the melting chamber 1 without being sufficiently preheated, and this also leads to a fear of occurrence of unevenness in the scrap melting rate in the furnace.

In the operation (production of molten iron) of the electric furnace of this embodiment, the arc heating portion A is constituted by the plurality of electrodes 5 in the melting chamber 1, and the cold iron source x is melted using this as a main heat source. Furthermore, a carbonaceous material is blown into the molten slag s through the carbonaceous material blowing lance 8 and used as an auxiliary heat source. Meanwhile, oxygen is blown into the molten iron m through the oxygen blowing lance 7, and the oxygen is used to decarburize the molten iron to reach a predetermined carbon amount. At this time, the oxygen and the carbonaceous material are blown through the lances 7 and 8, respectively, such that the carbon-oxygen ratio C/O is not less than 0.70. Furthermore, in order to melt an unmelted iron scrap x, the auxiliary burner 9 is appropriately used as required. By melting the iron scrap x in the melting chamber 1 as described above, a high-temperature exhaust gas including CO, CO₂, unreacted O₂, and outside air flowing in through an opening or the like is generated.

The iron scrap x, which is a raw material of molten iron, is charged to the electric furnace by using the supply bucket 13. The iron scrap x is sorted by respective types and temporarily placed in scrap storage areas, and from among them, predetermined types of iron scrap having predetermined mass ratios are blended to prepare the iron scrap x according to a steel type of molten iron to be produced. Moreover, in the present invention, the iron scrap x is blended such that the apparent bulk density (P) of the iron scrap to be filled in the preheating chamber 2 is not less than 0.50 t/m³ and less than 1.00 t/m³, and the iron scrap x thus blended is put in the supply bucket 13.

The supply bucket 13 containing the iron scrap x is moved to directly above the preheating chamber 2 by the traveling dolly 16, and from the supply bucket 13, the iron scrap x is charged into the preheating chamber 2 through the scrap charge port 20 in an opened state. As shown in FIG. 1, the iron scrap x charged through the scrap charge port 20 is in a state of being filled in the preheating chamber 2 and in the space 1a of the melting chamber 1 below the preheating chamber 2.

The filled state of the iron scrap x in the preheating chamber 2 is managed such that the iron scrap filling ratio H_{SC}/H_{SF} is 0.5 to 0.8. That is, during the operation, the iron scrap x preheated in the preheating chamber 2 sequentially descends to be supplied to the melting chamber 1, and the filling height of the iron scrap in the preheating chamber 2 is decreased accordingly. Thus, new iron scrap x is charged to the preheating chamber 2 at a predetermined timing, and the charging of the new iron scrap x is performed such that the iron scrap filling ratio H_{SC}/H_{SF} in the preheating chamber 2 is always maintained in a range of 0.5 to 0.8. To this end, it is preferable that a monitoring camera for monitoring an upper surface level of an iron scrap filling layer in the preheating chamber 2 and a sensor capable of detecting the upper surface level are provided, and based on information obtained thereby, the new iron scrap x in a predetermined amount is charged at a predetermined timing.

The iron scrap x to be charged to the electric furnace (preheating chamber 2) may contain an organic substance (for example, plastic, rubber, biomass, or the like).

A high-temperature exhaust gas generated when the iron scrap x is melted in the melting chamber 1 flows into the preheating chamber 2 through exhaust gas suction as described above, ascends in the preheating chamber 2, and then is exhausted through the exhaust port 21. In the course of this process, the iron scrap x filled in the preheating chamber 2 is preheated. In this embodiment, the exhaust gas flowing into the preheating chamber 2 is at a temperature of about 1000 to 1500°C.

According to the progress of melting of the iron scrap x in the arc heating portion A in the melting chamber 1, the iron scrap x filled in the space 1a of the melting chamber 1 is sequentially extruded toward the arc heating portion A by the extruder 3. Along therewith, the iron scrap x filled in the preheating chamber 2 sequentially descends, in response to which, as described above, new iron scrap x is charged from the supply bucket 13 into the preheating chamber 2, and this procedure is repeatedly performed. When the melting of the iron scrap x has progressed to such an extent that a predetermined amount (one charge) of molten iron is accumulated in the melting chamber 1, the molten iron m is tapped through the taphole 11 while the iron scrap x is maintained in a state of being filled in the preheating chamber 2 and in the space 1a of the melting chamber 1, and the molten slag s is tapped through the slag outlet 12.

At a start of the operation of the electric furnace, in order to uniformly charge iron scrap into the melting chamber 1, with the furnace lid 4 opened, the iron scrap or a carbonaceous material may be charged into a space of the melting chamber 2 on an opposite side to the preheating chamber 2, or when the iron scrap is charged, molten pig iron may be charged to the melting chamber 1. The molten pig iron can be charged to the melting chamber 1 by using a supply ladle (not shown) or a metal runner (not shown) leading to the melting chamber 1.

As a method for adding a carbonaceous material or oxygen, in addition to a lance blowing method as in this embodiment, a method of injection from above the melting chamber 1 into a bath, a method of bottom-blowing injection through a dedicated nozzle provided at the bottom of the furnace, or the like may be adopted. Furthermore, although both blowing lance for blowing the carbonaceous material and the oxygen may be immersed in molten slag or molten iron, the blowing lances may be configured to vary in level so as to correspond to a variation in the surface level of the molten slag or molten iron without being immersed the molten slag or molten iron as in this embodiment. Alternatively, there can be adopted a method in which an oxygen blowing lance is installed on the furnace wall so that oxygen is blown from the furnace wall.

Electric furnace types comprise a direct current type and an alternating current type. The electric furnace of this embodiment is of the alternating current type and thus has the electrodes 5 described above. In the case of an electric furnace of the direct current type, on the other hand, there is an electrode at a bottom of the furnace and another electrode at a top of the furnace, respectively, and an arc is struck between the electrodes to melt a cold iron source. The present invention is applicable also to the production of molten iron using such a direct current electric furnace.

Furthermore, in the present invention, there is no limitation on a type of an electric furnace used as long as a method is adopted in which an exhaust gas generated in the melting chamber 1 is guided to the preheating chamber 2 and used to preheat the iron scrap x, and the present invention is applicable to a method for producing molten iron using an electric furnace of any of various types, such as, for example, a method for producing molten iron using an electric furnace in which a melting chamber does not include an extruder.

### Examples

In an electric furnace facility including a melting chamber 1 and a preheating chamber 2 as shown in FIG. 1, iron scrap x was melted to produce molten iron. Specifications of the electric furnace facility are shown below.
Melting chamber: 7 m in furnace diameter, 5 m in furnace height
Preheating chamber: 3 m in width, 4 m in depth, 5 m in height
Furnace capacity: 210 tons
Power: alternating current at 50 Hz
Transformer capacity: 75 MVA
Number of electrodes: 3

Herein, 210 tons of iron scrap was charged into the melting chamber 1 and the preheating chamber 2, and an arc was generated by an electrode 5 (an upper graphite electrode) and used to melt the iron scrap. Furthermore, pure oxygen was blown at 3000 to 5000 Nm³/hr through an oxygen blowing lance 7, and coke breeze was blown at 60 to 70 kg/min through a carbonaceous material blowing lance 8. During the operation, an interior of the preheating chamber 2 was monitored using a monitoring camera, and when iron scrap that is filled in the preheating chamber 2 sequentially descended as iron scrap in the melting chamber 1 was melted, new iron scrap conveyed by a supply bucket 13 was supplied into the preheating chamber 2 through a scrap charge port 20 at a top of the preheating chamber so that a filling height of the iron scrap in the preheating chamber 2 was maintained within a certain range.

As the coke breeze blown through the carbonaceous material blowing lance 8, coke breeze having a fixed carbon content of not less than 85 mass%, a water content of not more than 1.0 mass%, a volatile content of not more than 1.5 mass%, and an average particle size of not more than 5 mm was used. Furthermore, an auxiliary burner 9 was appropriately used as required to melt the iron scrap x and heat molten iron m. The number of auxiliary burners 9 installed was one, and an amount of combustion used was 2000 Mcal/hr per one auxiliary burner.

The melting was allowed to progress in a state where the iron scrap was continuously present in the melting chamber 1 (a space 1a) and in the preheating chamber 2, and at a stage where 210 tons of molten iron was generated in the melting chamber 1, with 80 tons thereof left in the furnace, one charge of 130 tons of molten iron was tapped to a ladle through a taphole 11. This operation was performed so that, during tapping, the molten iron was at a temperature of about 1600°C and a C concentration in the molten iron was 0.060 mass%.

Also after the tapping of 130 tons, while oxygen and coke were being blown, melting of the iron scrap was continued, and when an amount of molten iron in the melting chamber 1 again reached 210 tons, 130 tons thereof was tapped, and this procedure was repeatedly performed.

The iron scrap used was obtained by blending two or more types of scrap described below in (i) to (iv) according to a bulk density determined based on the types of scrap specified in the "Uniform Standards of Ferrous Scraps" of the Japan Ferrous Raw Materials Association.
(i) Heavy: a type of scrap sized using a guillotine shear, gas cutting, heavy equipment, or the like and classified into HS and H1 to H4 according to a thickness, dimensions, and a unit weight. In this example, there was used a type obtained by combining "HS having a thickness of not less than 6 mm and a width or a height of not more than 500 mm × a length of not more than 700 mm" and "H4 having a thickness of less than 1 mm and a width or a height of not more than 500 mm × a length of not more than 1200 mm." The bulk density was set to 0.5 t/m³.
(ii) Shredder scrap: iron scrap obtained by mainly using a steel sheet processed product as a base material, shredding the steel sheet processed product with a shredder, and then sorting with a magnetic sorter. The bulk density was set to 1.3 t/m³.
(iii) Punched scrap: cutting chips and punching chips generated in producing a steel sheet processed product, which are classified into Press A, Press B, Busheling A, Busheling B, and so on according to a shape and a degree of oxidation. In this example, there was used a type obtained by combining "Press A having a total length of three sides of not more than 1800 mm and a length of a maximum side of not more than 800 mm and being in a form of a thin steel sheet not surface-treated and not oxidized" and "Busheling A having a width or a height of not more than 500 mm × a length of not more than 1200 mm and being in a form of a thin steel sheet not surface-treated and not oxidized." The bulk density was set to 0.6 t/m³.
(iv) Turning: cutting chips and swarf generated in manufacturing screws, mechanical components, or the like, which are classified into A, B, and so on according to a shape and a degree of oxidation. In this example, there was used a type obtained by combining " A being ordinary steel cutting chips oxidized to a less degree and having a chip shape" and "B being ordinary steel cutting chips slightly oxidized and having a curly shape." The bulk density was set to 0.4 t/m³.
(v) Cast Iron: block-shaped scrap obtained by finely crushing used castings, which is classified into A and B according to a base material. In this example, "A having a length of each side of not more than 1200 mm" was used. The bulk density was set to 3.0 t/m³.

Oil such as cutting oil may be adhering to "Turning", and the oil, when it burns, becomes a heat source to affect an electric power unit consumption. For this reason, a blending percentage in inventive examples and comparative examples (except for No. 17) was set to be constant. Furthermore, "Cast Iron" is higher in carbon content than the other types of iron scrap and thus has a lower melting point and excellent melting capability to affect the electric power unit consumption. For this reason, a blending percentage in the inventive examples and the comparative examples was set to be constant.

After adjusting the bulk density by blending a plurality of types of scrap as described above, the iron scrap was charged to the preheating chamber 2 by using the supply bucket 13. The iron scrap was charged to the preheating chamber 2 while maintaining a composition thereof constant for a sufficient amount of time for replacing the composition in the preheating chamber 2 with a predetermined composition according to a capacity of the preheating chamber 2.

An apparent bulk density (P) of iron scrap charged to the preheating chamber 2 (that is, the iron scrap filled in the preheating chamber 2) was calculated by the apparent bulk density (P) = (Heavy bulk density) × (Heavy blending ratio) + (Shredder scrap bulk density) × (Shredder scrap blending ratio) + (Punched scrap bulk density) × (Punched scrap blending ratio) + (Turning bulk density) × (Turning blending ratio) + (Cast Iron bulk density) × (Cast Iron bending ratio). Accordingly, for example, in the case of No. 1, the apparent bulk density (P) is calculated as follows: the apparent bulk density (P) = 0.5 t/m³ (Heavy bulk density) × 0.70 (Heavy blending ratio) + 1.3 t/m³ (Shredder scrap bulk density) × 0.10 (Shredder scrap blending ratio) + 0.4 t/m³ (Turning bulk density) × 0.18 (Turning blending ratio) + 3.0 t/m³ (Cast Iron bulk density) × 0.02 (Cast Iron blending ratio) = 0. 61 t/m³.

During the operation, a temperature of an exhaust gas and an oxygen concentration at a position of an exhaust port 21 of the preheating chamber 2 were measured, and a thus-obtained value of the oxygen concentration was used as a value of an oxygen concentration in the preheating chamber 2. Table 1 shows results and an electric power unit consumption index together with other operating conditions (iron scrap used, and the apparent bulk density (P) of iron scrap, an iron scrap filling ratio H_{SC}/H_{SF}, and a carbon-oxygen ratio C/O in the preheating chamber). The iron scrap filling ratio H_{SC}/H_{SF} in Table 1 shows that it fluctuated within that numerical range during the operation. Here, the electric power unit consumption index is an evaluation index for a melting experiment, and with an electric power unit consumption [kWh per ton of an amount of molten iron to be tapped] of No. 10 set to 100, a ratio of the electric power unit consumption of each of the examples thereto is shown. In the evaluation, a rating of "O" (passed) is given when the electric power unit consumption index was less than 100, and a rating of "×" (failed) is given when the electric power unit consumption index was not less than 100.

According to Table 1, it is understood that all of the inventive examples have an electric power unit consumption index of less than 100 and thus are capable of economically melting scrap with high energy utilization efficiency.

**[Table 1]**

| No. | Iron scrap blending ratio (mass%) | | | | | Operating conditions | | | | | | Electric power unit consum ption index | Evaluation | Remarks |
|---|---|---|---|---|---|---|---|---|---|---|---|---|---|---|
| | Heavy ^{∗}1 | Shredder scrap ^{∗}2 | Punched scrap ^{∗}3 | Turning ^{∗}4 | Cast iron ^{∗}5 | Iron scrap apparent bulk density (P) [t/m³] | Iron scrap filling ratio H_{SC}/H_{SF} | Carbon-oxygen ratio C/O | Auxiliary burner operation | Oxygen concentration [vol%] in preheating chamber | Exhaust gas temperature [°C] at exit of preheating chamber | | | |
| 1 | 70 | 10 | 0 | 18 | 2 | 0.61 | 0.6 to 0.8 | 0.78 | Not operated | 11 | 338 | 83 | ○ | Inventive Example |
| 2 | 60 | 10 | 10 | 18 | 2 | 0.62 | 0.6 to 0.8 | 0.80 | Not operated | 10 | 334 | 82 | ○ | Inventive Example |
| 3 | 50 | 20 | 10 | 18 | 2 | 0.70 | 0.6 to 0.8 | 0.75 | Not operated | 12 | 316 | 77 | ○ | Inventive Example |
| 4 | 40 | 35 | 5 | 18 | 2 | 0.82 | 0.6 to 0.8 | 0.76 | Not operated | 12 | 328 | 80 | ○ | Inventive Example |
| 5 | 35 | 45 | 0 | 18 | 2 | 0.89 | 0.6 to 0.8 | 0.71 | Not operated | 14 | 361 | 88 | ○ | Inventive Example |
| 6 | 80 | 0 | 0 | 18 | 2 | 0.53 | 0.6 to 0.8 | 0.72 | Not operated | 14 | 382 | 94 | ○ | Inventive Example |
| 7 | 10 | 50 | 20 | 18 | 2 | 0.95 | 0.6 to 0.8 | 0.77 | Not operated | 11 | 401 | 98 | ○ | Inventive Example |
| 8 | 50 | 20 | 10 | 18 | 2 | 0.70 | 0.5 to 0.7 | 0.75 | Not operated | 12 | 383 | 94 | ○ | Inventive Example |
| 9 | 70 | 10 | 0 | 18 | 2 | 0.61 | 0.6 to 0.8 | 0.78 | Operated | 11 | 355 | 81 | ○ | Inventive Example |
| 10 | 45 | 15 | 20 | 18 | 2 | 0.67 | 0.6 to 0.8 | 0.67 | Not operated | 16 | 408 | 100 | × | Comparative Example |
| 11 | 70 | 10 | 0 | 18 | 2 | 0.61 | 0.6 to 0.8 | 0.68 | Not operated | 16 | 411 | 101 | × | Comparative Example |
| 12 | 50 | 20 | 10 | 18 | 2 | 0.70 | 0.6 to 0.8 | 0.64 | Not operated | 18 | 413 | 101 | × | Comparative Example |
| 13 | 40 | 35 | 5 | 18 | 2 | 0.82 | 0.6 to 0.8 | 0.65 | Not operated | 17 | 470 | 115 | × | Comparative Example |
| 14 | 50 | 20 | 10 | 18 | 2 | 0.70 | 0.4 to 0.6 | 0.75 | Not operated | 12 | 417 | 102 | × | Comparative Example |
| 15 | 50 | 20 | 10 | 18 | 2 | 0.70 | 0.7 to 0.9 | 0.75 | Not operated | - | - | Not conducted in fear of trouble | × | Comparative Example |
| 16 | 20 | 60 | 0 | 18 | 2 | 1.01 | 0.6 to 0.8 | 0.78 | Not operated | 11 | 454 | 111 | × | Comparative Example |
| 17 | 30 | 0 | 0 | 68 | 2 | 0.48 | 0.6 to 0.8 | 0.78 | Not operated | 11 | 420 | 103 | × | Comparative Example |

| | | | | | | | | | | | | | | |
|---|---|---|---|---|---|---|---|---|---|---|---|---|---|---|
| *1 Bulk density: 0.5 t/m³ *2 Bulk density: 1.3 t/m³ *3 Bulk density: 0.6 t/m³ *4 Bulk density: 0.4 t/m³ *5 Bulk density: 3.0 t/m³ | | | | | | | | | | | | | | |

### Reference Signs List

- 1: melting chamber
- 1a: space
- 2: preheating chamber
- 3: extruder
- 4: furnace lid
- 5: electrode
- 6: exhaust duct
- 7: oxygen blowing lance
- 8: carbonaceous material blowing lance
- 9: auxiliary burner
- 10: furnace wall
- 11: taphole
- 12: slag outlet
- 13: supply bucket
- 14: taphole door
- 15: slag outlet door
- 16: traveling dolly
- 20: scrap charge port
- 21: exhaust port
- x: iron scrap
- m: molten iron
- s: molten slag
- A: arc heating portion

## Claims

1. A method for producing molten iron using an electric furnace comprising a melting chamber (1) for melting iron scrap by arc heating and a shaft-type preheating chamber (2) provided on and continuously with the melting chamber (1) and used to preheat the iron scrap, in which the iron scrap is sequentially charged into the preheating chamber (2) so that the preheating chamber (2) is filled with the iron scrap, an exhaust gas generated in the melting chamber (1) is passed through the preheating chamber (2) filled with the iron scrap so as to preheat the iron scrap, the iron scrap thus preheated is sequentially caused to descend in the preheating chamber (2) so as to be supplied into the melting chamber (1), and the iron scrap is melted in the melting chamber (1) to obtain molten iron,
**characterized in that**
the iron scrap is charged into the preheating chamber (2) so that an apparent bulk density (P) of the iron scrap filled in the preheating chamber (2) is not less than 0.50 t/m³ and less than 1.00 t/m³ and an iron scrap filling ratio H_{SC}/H_{SF} in the preheating chamber (2) (where Hsc denotes a filling height [m] of the iron scrap in the preheating chamber, and H_{SF} denotes a preheating chamber interior height [m]) is 0.5 to 0.8,
a carbonaceous material is used as an auxiliary heat source for melting the iron scrap in the melting chamber (1), and
oxygen and the carbonaceous material are blown into the melting chamber (1) so that a carbon-oxygen ratio C/O (where C denotes a carbon amount [kg] in the carbonaceous material, and O denotes an oxygen blowing amount [Nm³]) is not less than 0.70.

2. The method for producing molten iron using an electric furnace according to claim 1, wherein
an oxygen concentration in the preheating chamber (2) is less than 15 vol%.

3. The method for producing molten iron using an electric furnace according to claim 1 or 2, wherein
a blowing amount of the carbonaceous material into the melting chamber (1) is 0.3 to 1.4 (kg/min) per ton of molten iron to be tapped, and the oxygen blowing amount is 20 to 40 (Nm³/hr) per ton of molten iron to be tapped.

4. The method for producing molten iron using an electric furnace according to any one of claims 1 to 3, wherein
one or more auxiliary burners are installed in the melting chamber (1) and used to heat the iron scrap and molten iron in the melting chamber.

5. The method for producing molten iron using an electric furnace according to any one of claims 1 to 4, wherein
in the electric furnace, the preheating chamber (2) is provided on and continuously with the melting chamber (1) at a position distant from an arc heating portion, and a scrap charge port (20) is provided at a top of the preheating chamber (2), and
the iron scrap charged into the preheating chamber (2) through the scrap charge port (20) is filled in the preheating chamber (2) and in a space (1a) of the melting chamber (1) below the preheating chamber (2), and the iron scrap that is in the space (1a) is sequentially extruded toward the arc heating portion.

6. The method for producing molten iron using an electric furnace according to claim 5, wherein
the iron scrap in the space (1a) is sequentially extruded toward the arc heating portion by an extruder (3).

## Patentansprüche

1. Verfahren zur Herstellung von Eisenschmelze unter Verwendung eines Elektroofens, umfassend eine Schmelzkammer (1) zum Schmelzen von Eisenschrott durch Lichtbogenerwärmung und eine schachtartige Vorwärmkammer (2), die an der Schmelzkammer (1) und kontinuierlich mit dieser bereitgestellt ist und zum Vorwärmen des Eisenschrotts verwendet wird, wobei der Eisenschrott nacheinander in die Vorwärmkammer (2) geladen wird, so dass die Vorwärmkammer (2) mit dem Eisenschrott gefüllt wird, ein in der Schmelzkammer (1) erzeugtes Abgas durch die mit dem Eisenschrott gefüllte Vorwärmkammer (2) geleitet wird, um den Eisenschrott vorzuwärmen, der so vorgewärmte Eisenschrott in der Vorwärmkammer (2) nacheinander zum Absinken gebracht wird, um in die Schmelzkammer (1) zugeführt zu werden, und der Eisenschrott in der Schmelzkammer (1) geschmolzen wird, um Eisenschmelze zu erhalten,
**dadurch gekennzeichnet, dass**
der Eisenschrott so in die Vorwärmkammer (2) geladen wird, dass eine scheinbare Schüttdichte (P) des in die Vorwärmkammer (2) eingefüllten Eisenschrotts nicht weniger als 0,50 t/m³ und weniger als 1,00 t/m³ beträgt und ein Eisenschrott-Füllverhältnis H_{SC}/H_{SF} in der Vorwärmkammer (2) (wobei H_{SC} eine Füllhöhe [m] des Eisenschrotts in der Vorwärmkammer bezeichnet und H_{SF} eine Vorwärmkammer-Innenhöhe [m] bezeichnet) 0,5 bis 0,8 beträgt,
ein kohlenstoffhaltiges Material als Hilfswärmequelle zum Schmelzen des Eisenschrotts in der Schmelzkammer (1) verwendet wird, und
Sauerstoff und das kohlenstoffhaltige Material in die Schmelzkammer (1) eingeblasen werden, so dass ein Kohlenstoff-Sauerstoff-Verhältnis C/O (wobei C eine Kohlenstoffmenge [kg] in dem kohlenstoffhaltigen Material bezeichnet und O eine Sauerstoffeinblasmenge [Nm³] bezeichnet) nicht weniger als 0,70 beträgt.

2. Verfahren zur Herstellung von Eisenschmelze unter Verwendung eines Elektroofens nach Anspruch 1, wobei
eine Sauerstoffkonzentration in der Vorwärmkammer (2) weniger als 15 Vol.-% beträgt.

3. Verfahren zur Herstellung von Eisenschmelze unter Verwendung eines Elektroofens nach Anspruch 1 oder 2, wobei
eine Einblasmenge des kohlenstoffhaltigen Materials in die Schmelzkammer (1) 0,3 bis 1,4 (kg/min) pro Tonne abzustechender Eisenschmelze beträgt und die Sauerstoffeinblasmenge 20 bis 40 (Nm³/h) pro Tonne abzustechender Eisenschmelze beträgt.

4. Verfahren zur Herstellung von Eisenschmelze unter Verwendung eines Elektroofens nach einem der Ansprüche 1 bis 3, wobei
ein oder mehrere Hilfsbrenner in der Schmelzkammer (1) installiert sind und zum Erwärmen des Eisenschrotts und der Eisenschmelze in der Schmelzkammer verwendet werden.

5. Verfahren zur Herstellung von Eisenschmelze unter Verwendung eines Elektroofens nach einem der Ansprüche 1 bis 4, wobei
in dem Elektroofen die Vorwärmkammer (2) an der Schmelzkammer (1) und kontinuierlich mit dieser an einer von einem Lichtbogenerwärmungsabschnitt entfernten Position bereitgestellt ist und eine Schrottladeöffnung (20) an einer Oberseite der Vorwärmkammer (2) bereitgestellt ist, und
der Eisenschrott, der durch die Schrottladeöffnung (20) in die Vorwärmkammer (2) geladen wird, in die Vorwärmkammer (2) und in einen Raum (1a) der Schmelzkammer (1) unterhalb der Vorwärmkammer (2) gefüllt wird, und der Eisenschrott, der sich in dem Raum (1a) befindet, nacheinander in Richtung des Lichtbogenerwärmungsabschnitts extrudiert wird.

6. Verfahren zur Herstellung von Eisenschmelze unter Verwendung eines Elektroofens nach Anspruch 5, wobei
der Eisenschrott in dem Raum (1a) durch einen Extruder (3) nacheinander in Richtung des Lichtbogenerwärmungsabschnitts extrudiert wird.

## Revendications

1. Procédé de production de fer fondu en utilisant un four électrique comprenant une chambre de fusion (1) pour faire fondre des déchets ferreux par chauffage à l'arc et une chambre de préchauffage (2) de type arbre disposée sur et en continuité avec la chambre de fusion (1) et utilisée pour préchauffer les déchets ferreux, dans lequel les déchets ferreux sont chargés séquentiellement dans la chambre de préchauffage (2) de sorte que la chambre de préchauffage (2) est remplie avec les déchets ferreux, un gaz d'échappement généré dans la chambre de fusion (1) est passé à travers la chambre de préchauffage (2) remplie avec les déchets ferreux de façon à préchauffer les déchets ferreux, les déchets ferreux ainsi préchauffés sont amenés séquentiellement à descendre dans la chambre de préchauffage (2) de façon à être alimentés dans la chambre de fusion (1), et les déchets ferreux étant fondus dans la chambre de fusion (1) afin d'obtenir du fer fondu,
**caractérisé en ce que**
les déchets ferreux sont chargés dans la chambre de préchauffage (2) de sorte qu'une masse volumique apparente (P) des déchets ferreux remplissant la chambre de préchauffage (2) n'est pas inférieure à 0,50 t/m³ et est inférieure à 1,00 t/m³ et un rapport de remplissage des déchets ferreux H_{SC}/H_{SF} dans la chambre de préchauffage (2) (où Hsc désigne une hauteur de remplissage [m] des déchets ferreux dans la chambre de préchauffage, et H_{SF} désigne une hauteur intérieure de chambre de préchauffage [m]) est de 0,5 à 0,8,
un matériau carboné est utilisé comme source de chaleur auxiliaire pour faire fondre les déchets ferreux dans la chambre de fusion (1), et
de l'oxygène et le matériau carboné sont insufflés dans la chambre de fusion (1) de sorte qu'un rapport carbone-oxygène C/O (où C désigne une quantité de carbone [kg] dans le matériau carboné, et O désigne une quantité d'insufflation d'oxygène [Nm³]) n'est pas inférieur à 0,70.

2. Procédé de production de fer fondu utilisant un four électrique selon la revendication 1, dans lequel
une concentration d'oxygène dans la chambre de préchauffage (2) est inférieure à 15 % en vol.

3. Procédé de production de fer fondu utilisant un four électrique selon la revendication 1 ou la revendication 2, dans lequel
une quantité d'insufflation du matériau carboné dans la chambre de fusion (1) est de 0,3 à 1,4 (kg/min) par tonne de fer fondu à couler, et la quantité d'insufflation d'oxygène est de 20 à 40 (Nm³/h) par tonne de fer fondu à couler.

4. Procédé de production de fer fondu utilisant un four électrique selon l'une quelconque des revendications 1 à 3, dans lequel
un ou plusieurs brûleurs auxiliaires sont installés dans la chambre de fusion (1) et utilisés pour chauffer les déchets ferreux et le fer fondu dans la chambre de fusion.

5. Procédé de production de fer fondu utilisant un four électrique selon l'une quelconque des revendications 1 à 4, dans lequel
dans le four électrique, la chambre de préchauffage (2) est disposée sur et en continuité avec la chambre de fusion (1) à une position distante d'une portion de chauffage à l'arc, et un orifice de charge de déchets (20) est disposé au niveau d'une partie supérieure de la chambre de préchauffage (2), et
les déchets ferreux chargés dans la chambre de préchauffage (2) à travers l'orifice de charge de déchets (20) sont amenés à remplir la chambre de préchauffage (2) et un espace (1a) de la chambre de fusion (1) en dessous de la chambre de préchauffage (2), et les déchets ferreux qui sont dans l'espace (1a) sont extrudés séquentiellement vers la portion de chauffage à l'arc.

6. Procédé de production de fer fondu utilisant un four électrique selon la revendication 5, dans lequel
les déchets ferreux dans l'espace (1a) sont extrudés séquentiellement vers la portion de chauffage à l'arc par une extrudeuse (3).
